# EUROPEAN PATENT APPLICATION

(11) **EP 4 071 356 A1**
(43) Date of publication of application: **12.10.2022**
(21) Application number: 21167632.5
(22) Date of filing: 09.04.2021
(51) Int. Cl.: F03D 9/25, F03D 13/25, F03D 7/00, F03D 9/00, F03D 9/19

(54) **DAMPING OSCILLATIONS OF A WIND TURBINE HAVING AN ELECTROLYZER**

(71) Applicant: Siemens Gamesa Renewable Energy A/S, 7330 Brande (DK)
(72) Inventor: Egedal, Per, 7400 Herning (DK); Hoegh, Gustav, 7100 Vejle (DK)
(74) Representative: SGRE-Association

(57) **Abstract**

It is described a method of controlling a wind turbine (1) for damping at least one oscillation of at least one wind turbine component, the wind turbine having a generator system (2) coupled to an electrolyzer (7) for producing H2 by electrolysis of water, the method comprising: determining, in particular dynamically, a power capability (11a, 11b) of the electrolyzer (7), in particular based on electrolyzer state information (12); determining a primary power reference (13) and/or a damping power term (14) such that a sum power reference (15), being the sum of the primary power reference and the damping power term, satisfies the power capability (11a,11b) of the electrolyzer.

## Description

### Field of invention

The present invention relates to a method and a corresponding arrangement of controlling a wind turbine for damping at least one oscillation of at least one wind turbine component, the wind turbine having a generator system coupled to an electrolyzer for producing H2 by electrolysis of water. Furthermore, the present invention relates to a wind turbine comprising the arrangement.

### Art Background

During operation of a wind turbine, vibrations of one or more components of the wind turbines may evolve, for example including rotor blade vibration, tower vibration, bearing vibration, etc. These vibrations may have one or more vibration modes associated with respective resonance frequencies. During operation of the wind turbine, one or more vibration modes may be excited. The vibration may hamper the operation of the wind turbine and/or may introduce loads on wind turbine components.

US 2003/168864 A1 discloses a wind energy conversion system optimized for offshore application. It is contemplated to create energy intensive hydrogen-based products at the base of the wind turbine.

In a normal operation, a substantially constant power may be supplied to the electrolyzer to electrolyze water to produce H2. When the wind turbine is directly connected to an electrolyzer for producing H2, damping of mechanical oscillations or vibrations may be difficult, since the electrolyzer may be associated with one or more limitations which may prohibit to vary power supplied to the electrolyzer.

Thus, there may be a need for a method and a corresponding arrangement of controlling a wind turbine for damping at least one oscillation of a wind turbine component, the wind turbine having a generator system coupled to an electrolyzer, wherein a reliable damping can be achieved and electrolyzer limits can be met.

### Summary of the Invention

This need may be met by the subject matter according to the independent claims. Advantageous embodiments of the present invention are described by the dependent claims.

According to an embodiment of the present invention it is provided a method of controlling a wind turbine for damping at least one (e.g. mechanical) oscillation of at least one wind turbine component, the wind turbine having a generator system coupled to an electrolyzer for producing H2 by electrolysis of water, the method comprising: determining, in particular dynamically, a power capability of the electrolyzer, in particular based on electrolyzer state information; determining a primary power reference and/or damping power term such that a sum power reference, being the sum of the primary power reference and the damping power term, satisfies the power capability of the electrolyzer.

The method may be implemented in software and/or hardware and may for example be performed by a portion or a module of a wind turbine controller or a wind park controller. The wind turbine may for example be installed offshore and may have access to seawater. The wind turbine may comprise a purification system for purifying the seawater and supply it to the electrolyzer. The purified seawater may be electrolyzed within the electrolyzer in order to produce hydrogen and oxygen. The wind turbine or a platform at which the wind turbine is erected may comprise a hydrogen tank. Additionally or alternatively a pipe may be provided for conveying the hydrogen for example to another platform or a ship or to convey the hydrogen to an onshore station or onshore tank or onshore piping network.

The wind turbine component whose oscillation or vibration mode is damped may for example include a drive train including for example rotor, optional gearbox, one or more bearings and/or a wind turbine tower and/or a wind turbine blade. The method may be applied to damp one or more oscillation components of one or more components. Each oscillation component may be associated with a particular frequency and amplitude for example. The oscillation may for example be damped, by controlling the generator system to produce output power which may vary in an oscillatory manner for counteracting the oscillation of the wind turbine component to be damped.

The oscillation may e.g. be excited by the rotating rotor and/or impacting wind and/or sea waves.

Embodiments of the present invention may employ a method for damping a side-side oscillation of a tower of a wind turbine having a generator connected to the converter, wherein an acceleration of the tower is measured and at least one frequency value of at least one tower oscillation mode is determined. Further, the converter may be controlled based on the at least one acceleration value and the frequency value. Embodiments of the present invention may employ a similar or same strategy or method for controlling the generator system in order to damp at least one oscillation of a one or more other wind turbine components.

The electrolyzer may require DC power to be operated. DC power may be applied to two electrodes which are then be brought in contact with water. The direct electric current may drive the chemical reaction for separating hydrogen and oxygen in a water molecule. Thereby, the direct electric current is passed through an electrolyte, for example purified seawater, producing chemical reactions at the electrodes and resulting in decomposition of the water.

The generator system may comprise for example a generator, for example permanent magnet synchronous machine and/or doubly fed induction machine, wherein the generator in particular is configured to output an AC power. The generator may be driven by the rotating rotor having a hub at which plural rotor blades are connected. The generator may be coupled at its output terminals, in particular three-phase output terminals providing AC power, to a converter system or inverter system configured to convert the AC power to a DC power. The DC power may be supplied to the electrolyzer, in particular directly from the converter or inverter system. The converter system may comprise for example plural controllable switches, such as IGBTs, which may comprise gates which receive gate driver signals such as pulsed modulation signals from a gate driver circuitry.

The electrolyzer may be associated with or have one or more limitation values, such as electrical limitation values, regarding input power and/or input current and/or input voltage, e.g.. The power capacity or capability of the electrolyzer may relate to the maximum power which is allowed to be supplied to the electrolyzer, in particular over one or more predetermined time intervals. The power capacity or capability of the electrolyzer may depend on the electrolyzer state, including for example temperature, pressure, actual power supplied to the electrolyzer and so on. The power capacity or capability of the electrolyzer may repeatedly or regularly or continuously be determined, thereby in particular considering the actual electrolyzer state. In particular, the electrolyzer temperature may be considered dynamically to determine the power capacity or capability of the electrolyzer.

The damping power term may for example be determined independently from the primary power reference. The damping power term may be defined by for example a frequency and an amplitude of a periodically varying power, wherein its frequency may be equal to the frequency of the mechanical oscillation (component) to be damped. The damping power term may for example have a phase opposite (e.g. 180° shifted) to the phase of the actual oscillation of the wind turbine component. Thereby, when the generator system is controlled also considering the damping power term, the oscillation of the wind turbine component may be damped, i.e. its amplitude may be reduced over time.

The primary power reference may for example be determined taking into account rotor speed and a speed power curve, but may further take into account the determined power capacity or capability of the electrolyzer. Thereby, it may be ensured that the sum power reference (being obtained by adding the primary power reference and the damping power term) meets the power capacity or capability of the electrolyzer, in particular in the sense that the one or more limitations of the electrolyzer are not exceeded. Thereby, an effective damping may be achieved while protecting the electrolyzer from damage.

According to an embodiment of the present invention, the primary power reference and/or the damping power term are determined such that, when the generator system is operated according to the sum power reference, a power supplied to the electrolyzer satisfies the power capability of the electrolyzer.

The sum power reference may be for example supplied to an inverter or converter controller which is communicatively connected to the converter. The converter may thereby be controlled to output a power in accordance to the sum power reference. Ignoring any possible losses, the power supplied to the electrolyzer may substantially be equal to the sum power reference. However, in particular circumstances, the sum power reference as determined, may not exactly reflect the power which is actually supplied to the electrolyzer. Thus, this embodiment ensures that the power actually supplied to the electrolyzer meets or respects the power capacity or capability of the electrolyzer, thereby protecting the electrolyzer from damage.

The method may further include to damp the oscillation of the at least one wind turbine component, in particular due to the damping power term included in the sum power reference.

According to an embodiment of the present invention, the power capacity or capability defines a maximum power supply, in particular on average, to the electrolyzer for at least one of: operation over at least one predefined time interval, in particular a thermal time constant of the electrolyzer or a portion of the electrolyzer; steady state operation; transient or peak operation.

The power capacity may define or may be given as one or more maximum power values associated with associated operation times or time intervals.

Embodiments of the present invention enable to control the electrolyzer in a way, so that the power variations needed for the damping of resonances can be applied to the electrolyzer, without damaging the electrolyzer. The electrolyzer may impose other limitations on power output (for example change rate, frequency, start-up limitation, etc.) than a normal grid connected turbine. These limitations are considered in embodiments of the present invention to ensure damping of oscillations and integrity of the electrolyzer.

The method may in particular be performed for a wind turbine which is in normal operation not connected to any utility grid. Thus, the wind turbine may be an islanded wind turbine. The maximum power capability may be given or estimated or determined on different timescales, for example a particular steady state power value and/or a maximum power peak value (or current, hydrogen flow, etc.). Maximum power capabilities over different time periods may also be estimated. For example, a maximum average value over 1 min or one or more other time intervals may be estimated or determined. These estimates of the power capability may be affected by (but not limited to) the electrolyzer temperature, internal pressure, external pressure, inflow power quality (frequency components), internal states such as wear on main components, fault states, impurities in supply water, vibration, noise, etc. When maximum power supply is defined for different time intervals, the method may easily be applied for intended operational schedules or operational conditions or demands.

In particular, typical oscillation frequencies of oscillations of wind turbine components may be in a range of 0.2 Hz and 10 Hz, for example. The damping power term may for example range between 0% and 5% of the primary power reference, for effective damping.

According to an embodiment of the present invention, the sum power reference satisfies the power capability of the electrolyzer, if the sum power reference and/or the power supplied to the electrolyzer, in particular on average over a predetermined time interval, in particular on average over a thermal time constant of the electrolyzer or a portion thereof, is equal or below the maximum power supply associated with a scheduled operation duration or at least the thermal time constant of the electrolyzer or a portion thereof.

The damping power term may be an oscillating signal oscillating with the frequency of the oscillation (component) to be damped. On average, the damping power term may be zero or essentially zero. However, nevertheless, in the positive half period or negative half period, the electrolyzer may be operated close or even above its power limits. However, on average, at least averaged over a predetermined time interval, such as the thermal constant of the electrolyzer, the maximum allowed capability may not be exceeded.

The damping power term may be applied as long an oscillation or vibration is excited and e.g. the vibration amplitude is greater than a threshold. Thus, depending on the wind condition and sea wave condition, the damping term may continuously be added, however its amplitude may vary with the external wind and/or wave conditions.

The maximum power capacity or peak capacity of the electrolyzer may be given by component specifications and/or by life time impact simulations.

Damping the oscillation of the wind turbine component may be performed over a relatively long time duration. During this time duration, the state of the electrolyzer may change, in particular regarding its temperature for example. The change of the state of the electrolyzer may be taken into account to dynamically determine a new power capability which again may relate to one or more time intervals of intended operation time or allowed operation time. Thereby, the primary power reference may be adapted, in particular while keeping the damping power term essentially unchanged, such that the sum power reference satisfies the (updated) power capability of the electrolyzer.

According to an embodiment of the present invention, determining the primary power reference and/or the damping power term comprises determining the damping power term designed to dampen the oscillation; determining and/or adapting the primary power reference such that the sum power reference satisfies the power capability of the electrolyzer, thereby in particular keeping the damping power term unchanged.

When the damping power term is essentially kept unchanged, effective damping may be achieved. At the same time, due to the adaptation of the primary power reference, it might be ensured that the electrolyzer is operated such that the power capability is satisfied.

According to an embodiment of the present invention, the method further comprises using the damping power term and/or the primary power reference and/or an available power (e.g. as determined due to wind condition) to adapt, in particular to optimize, an operation of the electrolyzer; and/or setting an operation state of the electrolyzer or enable the electrolyzer such that power output can be increased up to the available power.

Components of the electrolyzer may have the stability to withstand short peak loads with a duration of e.g. 2 seconds to 20 seconds.

Thereby, it may be possible to quickly increase the power supplied to the electrolyzer, in order to increase production of hydrogen, for example upon increasing wind speed.

According to an embodiment of the present invention, determining the power capability of the electrolyzer is affected by at least one of the following state parameters of the electrolyzer: a temperature, an internal pressure, an external pressure, an inflow power quality (frequency components), an internal states such as wear on main components, fault states, at least one impurity in supply water, a vibration, a noise.

For example, the higher the temperature and/or the higher the internal pressure and/or the inflow power quality, the lower the power capacity may be determined. Thereby, the capability of the electrolyzer may reflect or may account for the actual state of the art of the electrolyzer. Thereby, damage or malfunction may be reduced or even avoided.

According to an embodiment of the present invention, the electrolyzer is controlled by a electrolyzer controller, which is configured to receive at least one of: a sensor signal relating to the electrolyzer; the sum power reference; the primary power reference; the available power; and/or which is configured to output at least one of: the power capability associated with one or more time intervals, a control signal to control the operational state of the electrolyzer.

The sensor signal may for example be generated by a sensor, such as temperature sensor, and/or pressure sensor and/or waterflow sensor, vibration sensor, such as microphone, impurity sensor. The electrolyzer controller may further consider structural configuration of the electrolyzer for determining the power capability.

The operational state of the electrolyzer may be changed by the electrolyzer controller based on input about the state of the electrolyzer. Additionally or alternatively, the operational state of the electrolyzer may be changed by a signal from the turbine controller about available power. So dependent on the estimated wind speed, the turbine controller may signal to the electrolyzer controller which magnitude of the setpoint it can accept.

According to an embodiment of the present invention, the converter is controlled by a converter controller, that is configured to receive the sum power reference, to derive control signals therefrom and to supply the control signals to the converter.

The converter controller may receive the sum power reference and may for example create or generate pulse width modulation signals which may be supplied to gates of controllable switches comprised within the converter. The converter may in particular comprise an AC-DC converter. Thereby, conventionally available components may be supported by embodiments of the present invention.

According to an embodiment of the present invention, a speed/power controller determines the primary power reference based on at least one of: the rotational speed of a rotor of the wind turbine, the damping power term, the power capability of the electrolyzer, in particular short term and/or steady state.

The speed/power controller may comprise an internal storage or may have access to an electronic storage wherein for example one or more speed power curves are stored. The speed/power controller may receive the rotational speed and, using the one or more power curves, may determine a preliminary primary power reference. However, the speed/power controller also considers the power capability of the electrolyzer, in order to determine the primary power reference. Thereby, the preliminary primary power reference might be reduced, in order to ensure, that the sum power reference satisfies the power capability of the electrolyzer. Thereby, internally, the speed/power controller may add the damping power term to a preliminary primary power reference. If the preliminary sum value is greater than the power capability or power capacity of the electrolyzer, the preliminary primary power reference may be reduced in order to derive the primary power reference, such that the sum power reference actually satisfies or meets the power capability or capacity of the electrolyzer.

According to an embodiment of the present invention, the damping power term is determined by a damping controller that receives a vibration indicating signal, in particular from an accelerometer and/or microphone and/or vibration estimator, and in particular receives an actual rotational speed signal.

The damping controller may be operated for one or more frequency components as for example measured by an accelerometer and/or microphone or as estimated via a vibration estimator. The damping term may be out of phase with the vibration signals measured or estimated, in particular may be phaseshifted by 180° for example. The damping controller may output for each oscillation mode to be damped, a damping term component. All damping term components may be added together, in order to enable damping of plural frequency components of plural oscillations.

According to an embodiment of the present invention, the generator system comprises: a generator; and a converter, in particular AC-DC converter, coupled to the generator, wherein the converter is (directly) coupled to the electrolyzer. Thereby, conventionally available components are supported.

It should be understood, that features, individually or in any combination, disclosed, explained, provided or mentioned in the context of a method of controlling a wind turbine for damping at least one mechanical oscillation of at least one wind turbine component, may, individually or in any combination, also applied to an arrangement for controlling a wind turbine, according to embodiments of the present invention and vice versa.

According to an embodiment of the present invention it is provided an arrangement for controlling a wind turbine for damping at least one oscillation of at least one wind turbine component, the wind turbine having a generator system coupled to an electrolyzer for producing H2 by electrolysis of water, the arrangement comprising a processing system configured to carry out or control a method according to one of the preceding embodiments.

The arrangement may be a portion of a wind turbine controller or a park controller for example.

According to an embodiment it is provided a wind turbine, comprising: a generator system; an electrolyzer for producing H2 by electrolysis of water, the electrolyzer being coupled to the generator system; and an arrangement according to the preceding embodiment.

The wind turbine may be disconnected from the utility grid and may be configured to perform the method. The wind turbine may be an offshore wind turbine.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.

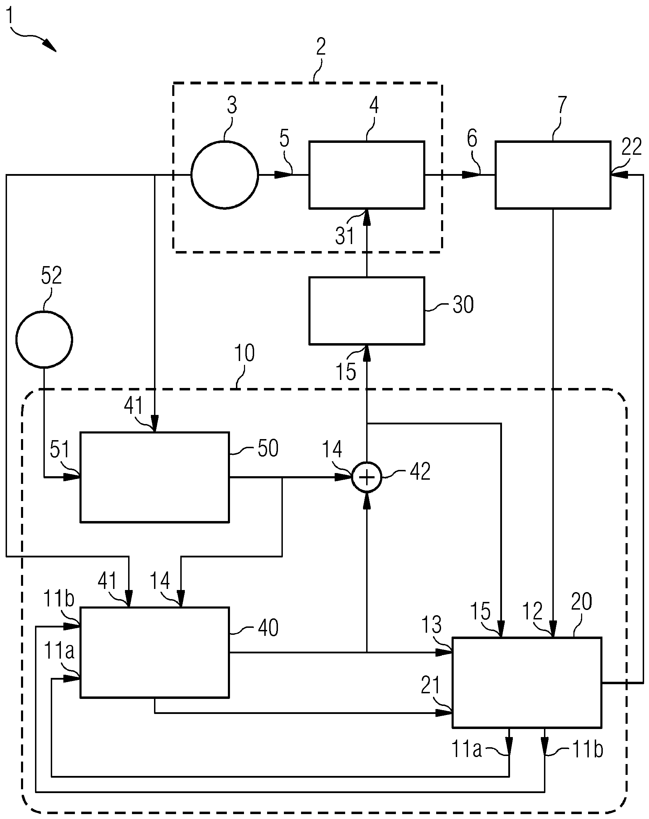

The Figure schematically illustrates a wind turbine according to an embodiment of the present invention.

### Detailed Description

The illustration in the drawing is in schematic form. The wind turbine 1 schematically illustrated in the Figure comprises a generator system 2, wherein not in particular illustrated rotor blades connected to a generator shaft drive the generator system. The generator system 2 comprises a generator 3 and a converter 4 which is coupled to the generator. The converter 4 is a AC-DC converter, which is configured to convert an AC power 5 received from the generator 3 to a DC power 6 output by the converter 4 and supplied to an electrolyzer 7. The electrolyzer 7 is also included in the wind turbine 1 and is directly connected to the inverter 4. The electrolyzer 7 is configured to produce hydrogen by electrolysis of water (which may be supplied by not illustrated tubing system).

The wind turbine 1 comprises an arrangement 10 according to an embodiment of the present invention for controlling the wind turbine 1 for damping at least one mechanical oscillation of at least one wind turbine component. In the illustrated embodiment, the arrangement 10 comprises a processing system which is configured to carry out or control a method of controlling a wind turbine according to an embodiment of the present invention.

The method comprises to determine, in particular dynamically, a power capability 11a, 11b of the electrolyzer 7, in particular based on electrolyzer state information 12. The electrolyzer state information 12 may for example comprise process sensor signals such as measured or estimated by sensors included within the electrolyzer 7.

The method further comprises to determine a primary power reference 13 and/or a damping power term 14 such that a sum power reference 15 being the sum of the primary power reference 13 and the damping power term 14 meets the power capability 11a, 11b of the electrolyzer 7.

In the embodiment as illustrated in the Figure, the power capabilities 11a, 11b relate to a maximum power supply in the short-term (11a) or in the steady state (11b). Thus, the power capability 11a relates to the maximum power supply for example in a peak operation or over a relatively short time interval. The power capability 11b relates to the maximum power supply in a steady state operation. In other embodiments, maximum power supply over one or more other time intervals may be derived.

In the illustrated embodiment, the power capability 11a, 11b is determined by an electrolyzer controller 20. Further, in the illustrated embodiment, the electrolyzer controller 20 receives the primary power reference 13 as well as the sum power reference 15 and further receives an available power 21 as well as the state information 12. Based on one or more of these input signals, the electrolyzer controller may control the state of the electrolyzer 7 by supplying electrolyzer control signals 22 based on one or more of the input signals.

In the embodiment illustrated in the Figure, the sum power reference 15 is supplied to a converter controller 30 which generates, based on the sum power reference 15, converter control signals 31 and supplies the converter control signals 31 to the converter 4.

In the illustrated embodiment, the arrangement 10 comprises the electrolyzer controller 20, a speed/power controller 40 as well as a damping controller 50. In other embodiments, one or more of the modules 20, 40, 50 may be missing. Furthermore, the arrangement 10 may be configured according to a different architecture, in particular regarding processing modules.

The electrolyzer state information 12 may comprise information regarding at least one of temperature, pressure, inflow power, internal states, impurity of supply water vibration and so forth. The speed/power controller 40 may determine the primary power reference 13 based on at least one of the rotational speed 41 of the rotor, the damping power term 14 and the power capability 11a, 11b of the electrolyzer.

The speed/power controller may be configured to calculate an available power 21 which may be supplied to the electrolyzer controller 20. Using an addition element 42, the primary power reference 13 is added to the damping power term 14 in order to derive the sum power reference 15.

The damping power term 14 is determined by the damping controller 50 which receives a vibration indicating signal 51, for example from accelerometer 52 or a microphone or an estimation module. For generating the damping power term 14, the damping controller 50 also receives the rotational speed 41 of the generator 3.

In the illustrated embodiment, the speed/power controller 40 ensures that the sum power reference 15 satisfies the capability 11a, 11b of the electrolyzer, by appropriately selecting or generating or choosing the primary power reference 13, while preferably leaving the damping power term 14 unchanged, as it is determined by the damping controller 50. Thereby, effective damping may be achieved.

The maximum power estimates (for example 11a, 11b) determined by the electrolyzer controller 20 are transmitted to the speed/power controller 40. The speed/power controller 40 can then ensure that the primary power reference 13 is chosen such that the damping term 14 can be added without exceeding the maximum power signals for the electrolyzer controller e.g. on average over a short time close to the thermal time constant of the electrolyzer or part of it.

The electrolyzer controller 20 may also receive information from the speed/power controller 40 both with and without the damping term. The signals may be used to optimize the internal states of the electrolyzer for the current level of power production. The electrolyzer controller may also receive information about the available power. The (primary) turbine power reference 13 may be below the available power, if for example the power production is reduced for example due to a structural load limitation, during start-up, etc. The available power signal 21 may be used by the electrolyzer controller 20 to ensure that the internal states of the electrolyzer is such that the turbine power reference 13 can quickly be raised to the available power. That means that despite running at a low power level, the electrolyzer may be prepared for a quick increase in power.

Embodiments of the present invention enable the electrolyzer controller to control the process in the electrolyzer and at the same time ensure that the damping power can be sent to the electrolyzer.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling a wind turbine (1) for damping at least one oscillation of at least one wind turbine component, the wind turbine having a generator system (2) coupled to an electrolyzer (7) for producing H2 by electrolysis of water, the method comprising:
determining, in particular dynamically, a power capability (11a, 11b) of the electrolyzer (7), in particular based on electrolyzer state information (12);
determining a primary power reference (13) and/or a damping power term (14) such that a sum power reference (15), being the sum of the primary power reference and the damping power term, satisfies the power capability (11a, 11b) of the electrolyzer.

2. Method according to the preceding claim, wherein the primary power reference (13) and/or the damping power term (14) are determined such that, when the generator system is operated according to the sum power reference (15), a power (6) supplied to the electrolyzer (7) satisfies the power capability (11a, 11b) of the electrolyzer.

3. Method according to one of the preceding claims, wherein the power capability defines a maximum power supply (11a, 11b), in particular on average, to the electrolyzer for at least one of:
operation over at least one predefined time interval, in particular a thermal time constant of the electrolyzer or a portion of the electrolyzer;
steady state operation;
transient or peak operation.

4. Method according to one of the preceding claims, wherein the sum power reference (15) satisfies the power capability (11a, 11b) of the electrolyzer, if the sum power reference and/or the power supplied to the electrolyzer, in particular on average over a predetermined time interval, in particular on average over a thermal time constant of the electrolyzer or a portion thereof, is equal or below the maximum power supply associated with a scheduled operation duration or at least the thermal time constant of the electrolyzer or a portion thereof.

5. Method according to one of the preceding claims, wherein determining the primary power reference (13) and/or the damping power term (14) comprises:
determining the damping power term (14) designed to dampen the oscillation;
determining and/or adapting the primary power reference (13) such that the sum power reference satisfies the power capability of the electrolyzer, thereby in particular keeping the damping power term unchanged.

6. Method according to one of the preceding claims, further comprising:
using the damping power term (14) and/or the primary power reference (13) and/or an available power to adapt, in particular to optimize, an operation of the electrolyzer (7); and/or
setting an operation state of the electrolyzer such that power output can be increased up to the available power.

7. Method according to one of the preceding claims, wherein determining the power capability (11a, 11b) of the electrolyzer is affected by at least one of the following state parameters of the electrolyzer:
a temperature,
an internal pressure,
an external pressure,
an inflow power quality (frequency components),
an internal states such as wear on main components,
fault states,
at least one impurity in supply water,
a vibration,
a noise.

8. Method according to one of the preceding claims, wherein the electrolyzer (7) is controlled by a electrolyzer controller (20),
which is configured to receive at least one of:
a sensor signal relating to the electrolyzer;
the sum power reference;
the primary power reference;
the available power; and/or
which is configured to output at least one of:
the power capability associated with one or more time intervals,
a control signal to control the operational state of the electrolyzer.

9. Method according to one of the preceding claims, wherein the converter (4) is controlled by a converter controller (30), that is configured to receive the sum power reference (15), to derive control signals (31) therefrom and to supply the control signals to the converter (4).

10. Method according to one of the preceding claims, wherein a speed/power controller (40) determines the primary power reference (13) based on at least one of:
the rotational speed (41) of a rotor of the wind turbine,
the damping power term (14),
the power capability (11a, 11b) of the electrolyzer, in particular short term and/or steady state.

11. Method according to one of the preceding claims, wherein the damping power term (14) is determined by a damping controller (50) that receives a vibration indicating signal (51), in particular from an accelerometer (52) and/or microphone and/or vibration estimator, and in particular receives an actual rotational speed signal (41).

12. Method according to one of the preceding claims, wherein the generator system (2) comprises:
a generator (3); and
a converter (4), in particular AC-DC converter, coupled to the generator,
wherein the converter is coupled to the electrolyzer (7).

13. Arrangement (10) for controlling a wind turbine (1) for damping at least one oscillation of at least one wind turbine component, the wind turbine having a generator system (2) coupled to an electrolyzer for producing H2 by electrolysis of water, the arrangement comprising a processing system configured to carry out or control a method according to one of the preceding claims.

14. Wind turbine (1), comprising:
a generator system (2);
an electrolyzer (7) for producing H2 by electrolysis of water, the electrolyzer being coupled to the generator system; and
an arrangement (10) according to the preceding claim.
